# EUROPÄISCHE PATENTSCHRIFT

(11) **EP 3 708 058 B1**
(45) Veröffentlichungstag und Bekanntmachung des Hinweises auf die Patenterteilung: **15.09.2021**
(21) Anmeldenummer: 20160887.4
(22) Anmeldetag: 04.03.2020
(51) Int. Cl.: A47L 9/28, A47L 11/40, G05D 1/02

(54) **BODENBEARBEITUNGSGERÄT UND SYSTEM AUS EINEM BODENBEARBEITUNGSGERÄT UND EINEM EXTERNEN ENDGERÄT**
SOIL WORKING IMPLEMENT AND SYSTEM COMPRISING A SOIL WORKING IMPLEMENT AND AN EXTERNAL TERMINAL
APPAREIL DE TRAITEMENT DU SOL ET SYSTÈME COMPRENANT L'APPAREIL DE TRAITEMENT DU SOL ET UN TERMINAL EXTERNE

(30) Priorität: 12.03.2019 DE 102019106227
(43) Veröffentlichungstag der Anmeldung: 16.09.2020
(73) Patentinhaber: Vorwerk & Co. Interholding GmbH, 42275 Wuppertal (DE)
(72) Erfinder: Holz, Christian, 44137 Dortmund (DE)
(74) Vertreter: Müller, Enno

(56) Entgegenhaltungen:
- EP-A1- 3 345 524
- EP-A1- 3 416 018
- EP-A2- 2 741 483
- US-A1- 2014 207 280

## Beschreibung

### Gebiet der Technik

Die Erfindung betrifft ein Bodenbearbeitungsgerät mit einem Bodenbearbeitungselement zur Einwirkung auf eine Bodenfläche, einer Detektionseinrichtung zur Detektion eines Flächenparameters der Bodenfläche und mit einer Datenverarbeitungseinrichtung zur Ermittlung des Flächenparameters anhand der von der Detektionseinrichtung detektierten Detektionssignale, wobei der Datenverarbeitungseinrichtung ein Datenspeicher zugeordnet ist, welcher einem Flächenparameter der Bodenfläche zugehörig eine Benutzungsempfehlung zur Benutzung eines bestimmten Bodenbearbeitungselementes speichert, und wobei die Datenverarbeitungseinrichtung eingerichtet ist, die zu dem ermittelten Flächenparameter korrespondierende Benutzungsempfehlung aus dem Datenspeicher abzurufen und über eine Schnittstelle an einen Nutzer zu übermitteln.

Des Weiteren betrifft die Erfindung ein System aus einem Bodenbearbeitungsgerät und einem externen Endgerät, wobei das Bodenbearbeitungsgerät und das externe Endgerät korrespondierende Schnittstellen für eine drahtlose Datenkommunikation miteinander aufweisen.

### Stand der Technik

Bodenbearbeitungsgeräte der vorgenannten Art sind im Stand der Technik hinreichend bekannt. Diese können beispielsweise sich selbsttätig fortbewegende Bodenbearbeitungsgeräte oder auch manuell durch einen Nutzer über eine zu bearbeitende Fläche geführte Geräte sein. Im Sinne von Bodenbearbeitungsgeräten sind Geräte gemeint, die eine Bodenbearbeitung durchführen, beispielsweise eine Bodenreinigung, insbesondere mittels Saugen und/oder Wischen, aber auch Bodenbearbeitungen wie Polieren, Schleifen, Mähen, Fegen oder ähnliches.

Die Bodenbearbeitungsgeräte können zur Detektion eines Flächenparameters der Bodenfläche beispielsweise Ultraschallmessverfahren, optische Messverfahren, taktile Messverfahren, Bildverarbeitung, Reibwiderstandsmessungen, Leistungsmessungen oder ähnliche verwenden. Der ermittelte Flächenparameter der Bodenfläche kann beispielsweise die Art einer Bodenfläche sein, insbesondere ein Teppichboden oder ein Hartboden, welche üblicherweise mit unterschiedlichen Bodenbearbeitungselementen bearbeitet werden.

Aus der EP 3 345 524 A1 ist beispielsweise ein sich selbsttätig fortbewegendes Bodenbearbeitungsgerät bekannt, welches sich über eine zu bearbeitende Fläche bewegt und eine Bearbeitung der Fläche in Abhängigkeit von einem Flächenparameter der Fläche durchführt, wobei ein Geräteparameter des Bodenbearbeitungsgerätes für die Bearbeitung der Fläche in Abhängigkeit von dem Flächenparameter variiert wird. Dabei wird der Flächenparameter ermittelt und mit in einer Datenbank hinterlegten Referenzflächenparametern verglichen, wobei ein zu einem dem Flächenparameter nächstliegenden Referenzflächenparameter korrespondierender Geräteparameter ausgewählt wird. Der ausgewählte Geräteparameter kann an einen Nutzer des Bodenbearbeitungsgerätes ausgegeben werden und/oder automatisch an dem Bodenbearbeitungsgerät eingestellt werden.

Obwohl die vorgenannten Bodenbearbeitungsgeräte einem Nutzer bereits in vorteilhafter Art und Weise eine Empfehlung für einen zu verwendenden Geräteparameter übermitteln bzw. diesen direkt an dem Bodenbearbeitungsgerät einstellen, kann es bei der Bearbeitung einer Umgebung mit sehr inhomogenen Flächeneigenschaften zu einer besonders häufigen Informationsmitteilung an den Nutzer des Bodenbearbeitungsgerätes kommen, was dieser gegebenenfalls als störend empfindet.

### Zusammenfassung der Erfindung

Ausgehend von dem vorgenannten Stand der Technik ist es daher Aufgabe der Erfindung, ein Bodenbearbeitungsgerät so weiterzubilden, dass dieses mit minimalem Aufwand für den Nutzer eine möglichst optimale Bodenbearbeitung auch bei inhomogenen Umgebungen ausführt.

Zur Lösung der vorgenannten Aufgabe wird vorgeschlagen, dass die Datenverarbeitungseinrichtung des Weiteren eingerichtet ist, eine Größe mindestens eines einen ersten Flächenparameter aufweisenden ersten Flächenbereichs mit der Größe der übrigen Flächenbereiche der Umgebung, welche einen von dem ersten Flächenparameter abweichenden Flächenparameter aufweisen, zu vergleichen und diejenige Benutzungsempfehlung aus dem Datenspeicher abzurufen, welche zu dem Flächenparameter korrespondiert, der zu dem größten Flächenanteil der Gesamtheit der Flächenbereiche korrespondiert.

Erfindungsgemäß ist die Datenverarbeitungseinrichtung des Bodenbearbeitungsgerätes nunmehr so ausgestaltet, dass die Umgebung insgesamt in Bezug auf alle dort vertretenen Flächenparameter analysiert wird, um dann eine solche Benutzungsempfehlung an einen Nutzer des Bodenbearbeitungsgerätes auszugeben, welche eine bestmögliche Bearbeitung der Umgebung insgesamt ermöglicht. Die Benutzungsempfehlung beinhaltet dabei eine Empfehlung an den Nutzer, ein bestimmtes Bodenbearbeitungselement für die gesamte Umgebung zu benutzen, so dass der Nutzer gegebenenfalls nur einmalig einen Austausch bzw. eine Montage des Bodenbearbeitungselementes an dem Bodenbearbeitungsgerät für die Bearbeitung der Umgebung vornehmen muss. Die Gesamtheit der Flächenbereiche der Umgebung kann dabei von einem Nutzer definiert werden. Diese Gesamtheit umfasst vorzugsweise Flächenbereiche mit unterschiedlichen Flächenparametern. In diesem Sinne kann die Umgebung alle Räume einer Wohnung umfassen, jedoch auch nur einen Teilbereich dieser, beispielsweise nur einen definierten Anteil der in der Wohnung vorhandenen Räume. Die verschiedenen Flächenbereiche der Umgebung können jedoch auch Bereiche nur eines einzigen Raumes sein, welcher eine Mehrzahl verschiedener Flächenparameter aufweist, beispielsweise einen verschmutzten Aufenthaltsbereich eines Tieres und/oder eines Menschen und einen weniger benutzten Teilbereich, beispielsweise entlang einer Raumwand. Die Flächenbereiche können sich beispielsweise durch eine Art und/ oder eine Menge einer dort vorhandenen Verschmutzung, und/oder durch die Art eines Flächenbelags unterscheiden. In beiden Fällen ist es für eine optimale Bodenbearbeitung erforderlich oder zumindest empfehlenswert, darauf angepasste Bodenbearbeitungselemente zu verwenden. Damit der Nutzer jedoch nicht für jede einzelne Flächenparameteränderung einer zu bearbeitenden Umgebung einen Wechsel des Bodenbearbeitungselementes vornehmen muss, ermittelt die Datenverarbeitungseinrichtung dasjenige Bodenbearbeitungselement, welches insgesamt den besten Bodenbearbeitungserfolg für die Gesamtheit der zu bearbeitenden Flächenbereiche liefert. Dieses Bodenbearbeitungselement wird dann als ein Universalzubehör für beispielsweise einen gesamten Bodenbearbeitungszyklus in der definierten Umgebung verwendet. Zwar kann das Bodenbearbeitungsgerät grundsätzlich mit einem Bodenbearbeitungselement ausgestattet werden, welche ganz spezifische Eigenschaften für nur einen der Flächenbereiche der Umgebung aufweist, jedoch wird für eine komfortablere Benutzung des Bodenbearbeitungsgerätes beispielsweise über die Flächenparameter der gesamten Umgebung gemittelt, um eine in Bezug auf den Bodenbearbeitungserfolg günstigste Benutzungsempfehlung für eines der Bodenbearbeitungselemente zu geben. Die Datenverarbeitungseinrichtung ermittelt dazu aus den Detektionssignalen der Detektionseinrichtung eigenständig, welches Zubehör für den aktuell zu bearbeitenden Arbeitsbereich besonders geeignet ist. Sofern dieses Zubehör bereits mit dem Bodenbearbeitungsgerät verbunden ist, gibt die Datenverarbeitungseinrichtung vorzugsweise keine Benutzungsempfehlung aus, sondern nur dann, wenn die Empfehlung die Benutzung eines Bodenbearbeitungselementes enthält, die derzeit noch nicht an dem Bodenbearbeitungsgerät befestigt ist. Insgesamt ermittelt die Datenverarbeitungseinrichtung beispielsweise die prozentualen Gesamt-Flächenanteile derjenigen Flächenbereiche mit einem gleichartigen Flächenparameter, ermittelt daraufhin denjenigen Flächenparameter, welcher dem größten Gesamt-Flächenanteil zugeordnet ist, und ruft passend zu diesem Flächenparameter eine Benutzungsempfehlung aus dem Datenspeicher ab. Beispielsweise ermittelt die Datenverarbeitungseinrichtung aus den Detektionssignalen der Detektionseinrichtung diejenigen Anteile der Umgebung, welche mit Teppichboden belegt sind, und diejenigen Anteile, welche einen Hartboden aufweisen. Wenn die Datenverarbeitungseinrichtung feststellt, dass beispielsweise 70 Prozent der Umgebung mit Hartboden, beispielsweise Holzdielen und Fliesen, belegt sind, und nur ein geringerer Anteil von 30 Prozent mit Teppichen oder Teppichboden belegt ist, ruft die Datenverarbeitungseinrichtung eine zu dem Flächenparameter "Hartboden" passende Benutzungsempfehlung aus dem Datenspeicher ab und übermittelt diese via der Schnittstelle an den Nutzer. Der Flächenparameter kann dabei jedoch auch zusätzlich noch weiter verfeinert sein, beispielsweise in Bezug auf verschiedene Beschaffenheiten von Teppichen bzw. Teppichböden, insbesondere Hochflorteppich, Niederflorteppich, Teppichen mit Fransen und ähnliches. In dem Fall, dass die Umgebung überwiegend Hartboden aufweist, kann die Benutzungsempfehlung dem Nutzer einen Hinweis darauf geben, eine Hartbodendüse zu verwenden. Wenn hingegen mehrere Läufer oder hochflorige Teppiche in der Umgebung vorhanden sind, könnte die Benutzungsempfehlung eine weiche Bürste vorschlagen, welche die Läufer bzw. Teppiche nicht relativ zu einer Bodenfläche verschiebt.

Des Weiteren wird vorgeschlagen, dass das Bodenbearbeitungsgerät eine Navigationseinrichtung aufweist, welche eingerichtet ist, eine Umgebungskarte der Umgebung des Bodenbearbeitungsgerätes zu erstellen, wobei die Datenverarbeitungseinrichtung eingerichtet ist, die Flächenparameter der Bodenfläche in die Umgebungskarte einzutragen. Bodenbearbeitungsgeräte mit einer Navigationseinrichtung sind üblicherweise sich selbsttätig fortbewegende Bodenbearbeitungsgeräte, beispielsweise Reinigungsroboter, welche selbsttätig innerhalb der Umgebung verfahren und ihre Eigenposition lokalisieren können. Der Navigationseinrichtung ist eine Sensorik zugeordnet, die Umgebungsmerkmale der Umgebung detektiert und daraus einen Grundriss der Umgebung erstellt sowie darin befindliche Objekte ermittelt. Der Navigationseinrichtung kann beispielsweise eine Abstandsmesseinrichtung zugeordnet sein, die Abstände zu Raumbegrenzungen und/oder Hindernissen misst. Dies kann beispielsweise eine 360°-Abstandsmesseinrichtung sein, insbesondere eine Lasermesseinrichtung. Für die Navigation erstellt die Navigationseinrichtung, bzw. eine zugeordnete Datenverarbeitungseinrichtung die Umgebungskarte, welche die Merkmale der Umgebung enthält und auf deren Basis beispielsweise eine Pfadplanung für das Bodenbearbeitungsgerät vorgenommen werden kann. Das Erstellen der Umgebungskarte kann im Rahmen einer Lernfahrt des Bodenbearbeitungsgerätes erfolgen, bei welcher das Bodenbearbeitungsgerät ohne Ausführung einer Bodenbearbeitungstätigkeit durch die Umgebung verfährt und Objekte misst. Alternativ ist es jedoch auch möglich, dass die Umgebungskarte während einer Bodenbearbeitungstätigkeit erstellt oder zumindest erweitert und/oder aktualisiert wird. Im Rahmen der Erstellung der Umgebungskarte kann die Detektionseinrichtung des Bodenbearbeitungsgerätes beispielsweise auch die Flächenparameter der Bodenfläche der Umgebung detektieren, wobei die Datenverarbeitungseinrichtung die detektierten Flächenparameter dann den korrespondierenden Flächenbereichen in der Umgebungskarte zuordnet. Diese Umgebungskarte mit den enthaltenen Flächenparametern kann einem Nutzer des Bodenbearbeitungsgerätes ebenfalls über die Schnittstelle übermittelt oder angezeigt werden. Um einen überwiegend in der Umgebung vertretenen Flächenparameter ermitteln zu können, kann die Datenverarbeitungseinrichtung des Bodenbearbeitungsgerätes auf die Umgebungskarte zugreifen und ein mengenmäßiges Verhältnis der Flächenbereiche in Abhängigkeit von den dort vertretenen Flächenparametern errechnen. Ebenso kann auf der Basis der Umgebungskarte eine bestimmte Gesamtheit von Flächenbereichen definiert werden, welche in einem Arbeitszyklus bearbeitet werden sollen und für welche ein universell geeignetes Bodenbearbeitungselement zu verwenden ist.

Es wird vorgeschlagen, dass die Schnittstelle ein Display zur Anzeige der Benutzungsempfehlung aufweist. Die Benutzungsempfehlung wird dem Nutzer des Bodenbearbeitungsgerätes somit auf einem Display des Bodenbearbeitungsgerätes angezeigt. Dabei kann auf dem Display eine Empfehlung in Text- und/oder Bildform angezeigt werden.

Alternativ oder zusätzlich kann ebenso vorgesehen sein, dass die Schnittstelle eine Datenkommunikationsschnittstelle zur drahtlosen Kommunikation mit einem externen Endgerät aufweist, wobei die Datenverarbeitungseinrichtung eingerichtet ist, die Benutzungsempfehlung mittels der Datenkommunikationsschnittstelle an das externe Endgerät zu übermitteln und/oder eine Information über eine Bearbeitungspräferenz eines Nutzers zu empfangen. Gemäß dieser Ausgestaltung kann die Benutzungsempfehlung auf einem externen Endgerät angezeigt werden, welches mit dem Bodenbearbeitungsgerät in Kommunikationsverbindung steht. Zu diesem Zweck weist das Bodenbearbeitungsgerät beispielsweise eine Bluetooth- und/oder WLAN-Schnittstelle auf, welche eine drahtlose Datenkommunikation mit dem externen Endgerät ermöglicht. Das externe Endgerät kann beispielsweise ein mobiles Endgerät wie ein Mobiletelefon, Tablet-Computer oder ähnliches sein. Das externe Endgerät kann dann wiederum ein Display aufweisen, auf welchem die Benutzungsempfehlung angezeigt wird. In umgekehrter Kommunikationsrichtung ist die Schnittstelle des Bodenbearbeitungsgerätes eingerichtet, Mitteilungen von dem externen Endgerät zu empfangen, nämlich hier Informationen über eine Bearbeitungspräferenz eines Nutzers, die die Bodenbearbeitungstätigkeit des Bodenbearbeitungsgerätes betrifft. Die Datenverarbeitungseinrichtung des Bodenbearbeitungsgerätes ist dann wiederum so eingerichtet, dass diese die Bearbeitungspräferenz des Nutzers bei der Ermittlung der Benutzungsempfehlung berücksichtigt und eine Benutzungsempfehlung aus dem Datenspeicher des Bodenbearbeitungsgerätes abruft, welche einerseits dem ermittelten Flächenparameter der Umgebung entspricht, und andererseits auch der Bearbeitungspräferenz des Nutzers Rechnung trägt.

Insbesondere in diesem Sinne kann vorgesehen sein, dass die Datenverarbeitungseinrichtung eingerichtet ist, die Benutzungsempfehlung zusätzlich in Abhängigkeit von einer Bearbeitungspräferenz eines Nutzers zu wählen und/oder zu variieren, wobei die Bearbeitungspräferenz insbesondere eine Bearbeitungsdauer und/oder eine Bearbeitungsqualität der Bodenbearbeitungstätigkeit ist. Diese Ausgestaltung ermöglicht eine Interaktion mit dem Nutzer des Bodenbearbeitungsgerätes über das externe Endgerät. Auf dem externen Endgerät kann beispielsweise eine Applikation installiert sein, über welche der Nutzer seine Bearbeitungspräferenz mitteilen kann, beispielsweise ob sein Fokus für die Bodenbearbeitungstätigkeit des Bodenbearbeitungsgerätes eher darauf liegt, eine möglichst intensive Bodenbearbeitung durchzuführen, beispielsweise eine Reinigung mit einer maximalen Staub- und/oder Schmutzaufnahme, oder ob er eher an einer geringen Zeitspanne zur Ausführung der Bodenbearbeitungstätigkeit interessiert ist. In Kombination mit den durch die Detektionseinrichtung des Bodenbearbeitungsgerätes ermittelten Flächenparametern kann die Auswahl des Bodenbearbeitungselementes dann zusätzlich auch an die Wünsche des Nutzers angepasst werden. Um die Benutzungsempfehlung sowohl an den Flächenparameter, als auch an die Bearbeitungspräferenz anzupassen, weist der Datenspeicher entsprechende Zuordnungen zu Bodenbearbeitungselementen auf.

Schließlich wird vorgeschlagen, dass das Bodenbearbeitungselement eine Reinigungsbürste und/oder ein Wischelement ist. Bei dem Bodenbearbeitungsgerät handelt es sich beispielsweise um einen Staubsauger, ein Wischgerät oder auch um eine Saug-Wisch-Kombination. Je nach der Art der zu reinigenden Bodenfläche, beispielsweise Teppich, Teppichboden, Kork, Holzdielen, Laminat, Fliesen, PVC oder ähnliches sind andere Reinigungselemente wie Reinigungsbürsten und/oder Wischelemente besonders geeignet, um vorhandene Verschmutzungen von der Bodenfläche zu lösen.

Neben dem zuvor beschriebenen Bodenbearbeitungsgerät wird mit der Erfindung des Weiteren auch ein System aus einem Bodenbearbeitungsgerät der erfindungsgemäßen Art und einem externen Endgerät vorgeschlagen, wobei das Bodenbearbeitungsgerät und das externe Endgerät korrespondierende Schnittstellen für eine drahtlose Datenkommunikation miteinander aufweisen, und wobei die Datenverarbeitungseinrichtung des Bodenbearbeitungsgerätes eingerichtet ist, eine zu einem ermittelten Flächenparameter der Bodenfläche korrespondierende Benutzungsempfehlung über die Schnittstelle an das externe Endgerät zu übermitteln und/oder eine Information über eine Bearbeitungspräferenz eines Nutzers über die Schnittstelle zu empfangen.

Das System umfasst dabei ein erfindungsgemäßes Bodenbearbeitungsgerät mit einem oder mehreren der zuvor beschriebenen Merkmale und Vorteile. Insbesondere ist auch das Bodenbearbeitungsgerät im Rahmen des Systems mit einer Datenverarbeitungseinrichtung ausgestattet, die eingerichtet ist, quantitativ einen Flächenanteil eines einen ersten Flächenparameter aufweisenden ersten Flächenbereichs in Relation zu den übrigen Flächenbereichen der Umgebung, welche einen von dem ersten Flächenparameter abweichenden Flächenparameter aufweisen, zu bestimmen und diejenige Benutzungsempfehlung aus dem Datenspeicher abzurufen, welche zu dem Flächenparameter korrespondiert, der quantitativ am häufigsten in der Gesamtheit der Flächenbereiche der Umgebung vertreten ist. Die Benutzungsempfehlung wird von dem Bodenbearbeitungsgerät über die Schnittstelle des Bodenbearbeitungsgerätes an eine korrespondierende Schnittstelle des externen Endgerätes übermittelt, so dass das externe Endgerät die Benutzungsempfehlung anschließend an einen Nutzer mitteilen kann. Beispielsweise kann auf einem Display des externen Endgerätes eine Benutzungsempfehlung in Textform und/oder Bildform dargestellt werden. Das externe Endgerät dient des Weiteren zur Übermittlung einer Bearbeitungspräferenz des Nutzers an die Datenverarbeitungseinrichtung des Bodenbearbeitungsgerätes. Insbesondere weist das externe Endgerät eine Applikation auf, die eine derartige Nutzereingabe des Nutzers zulässt. Beispielsweise kann dem Nutzer auf einem Display mittels der Applikation eine Oberfläche mit verschiedenen Präferenzen angezeigt werden, von welchen der Nutzer eine auswählen kann. Zu den wählbaren Präferenzen können beispielsweise eine intensive Bodenbearbeitung und/oder eine besonders schnelle Bodenbearbeitung zählen. Der Nutzer kann einen Vorschlag durch Bestätigen akzeptieren oder alternativ eine Präferenz in Textform an das externe Endgerät übermitteln.

### Kurze Beschreibung der Zeichnung

Im Folgenden wird die Erfindung anhand eines Ausführungsbeispiels näher erläutert. Es zeigt:

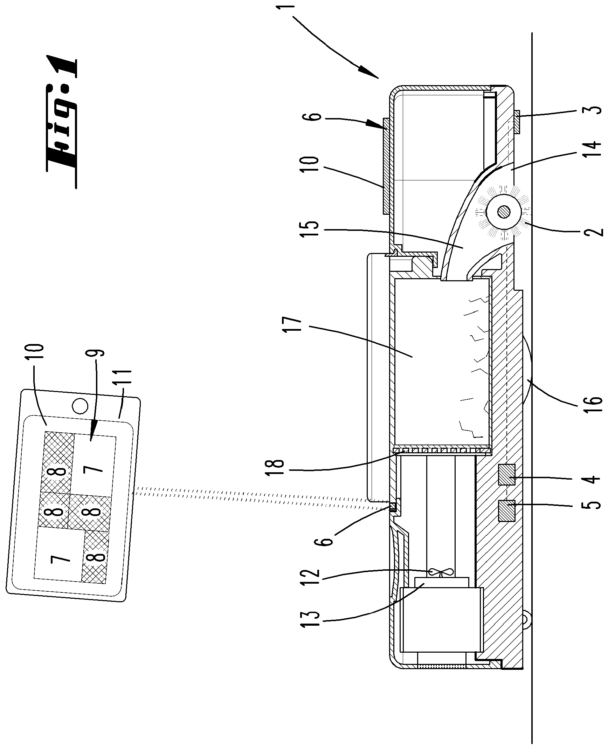

- Fig. 1: ein erfindungsgemäßes Bodenbearbeitungsgerät sowie ein damit in Kommunikationsverbindung stehendes externes Endgerät.

### Beschreibung der Ausführungsformen

Figur 1 zeigt ein beispielhaftes Bodenbearbeitungsgerät 1, welches hier als Saugroboter ausgebildet ist. Das Bodenbearbeitungsgerät 1 verfügt für eine selbsttätige Navigation und Selbstlokalisierung über eine nicht weiter dargestellte Abstandsmesseinrichtung, mit welcher Abstände zu Objekten und Raumbegrenzungen in der Umgebung des Bodenbearbeitungsgerätes 1 gemessen werden können. Auf der Basis der gemessenen Abstände wird eine Umgebungskarte 9 erstellt, die in einem Datenspeicher 5 des Bodenbearbeitungsgerätes 1 gespeichert wird. Eine Datenverarbeitungseinrichtung 4 des Bodenbearbeitungsgerätes 1 greift auf die Umgebungskarte 9 zu, um sich innerhalb der Umgebung zu lokalisieren und gegebenenfalls einen Fortbewegungspfad für eine Bodenbearbeitungstätigkeit zu planen. Die Abstandsmesseinrichtung ist hier beispielsweise eine Triangulationsmesseinrichtung mit einer Lichtquelle, welche einen Lichtstrahl auf Objekte und/ oder Raumbegrenzungen in der Umgebung richtet und ein reflektiertes Lichtsignal empfängt. Daraus kann die Datenverarbeitungseinrichtung 4 einen Abstand zu dem jeweiligen Objekt bzw. der Raumbegrenzung errechnen. Der von der Lichtquelle emittierte Lichtstrahl kann in einem Winkelbereich von 360 Grad um das Bodenbearbeitungsgerät 1 rotiert werden, so dass eine Rundum-Abstandsmessung möglich ist.

Das Bodenbearbeitungsgerät 1 verfügt hier zudem über angetriebene Räder 16 und eine Saugeinrichtung mit einem Gebläse 12 und einem das Gebläse 12 antreibenden Elektromotor 13. Während der Durchführung einer Bodenbearbeitungstätigkeit saugt das rotierende Gebläse 12 Sauggut in eine Filterkammer 17. Dazu erzeugt das Gebläse 12 in einem Saugkanal 15 und an einem bodennahen Saugmund 14 des Bodenbearbeitungsgerätes 1 einen Unterdruck, welcher das Sauggut in die Filterkammer 17 einsaugt. Der Filterkammer 17 ist ein Filterelement 18 zugeordnet, so dass das Sauggut in der Filterkammer 17 zurückgehalten wird und ausschließlich gereinigte Luft weiter durch das Filterelement 18 hindurch zu dem Gebläse 12 bzw. dem Elektromotor 13 strömen kann. Dem Saugmund 14 ist des Weiteren ein Bodenbearbeitungselement 2 zugeordnet, nämlich hier eine um eine im Wesentlichen horizontale Achse rotierende Borstenwalze. Das Bodenbearbeitungselement 2 ist wechselbar an dem Bodenbearbeitungsgerät 1 befestigt, so dass ein Nutzer des Bodenbearbeitungsgerätes 1 das dargestellte Bodenbearbeitungselement 2 gegen ein alternatives Bodenbearbeitungselement 2 tauschen kann.

An der Unterseite des Bodenbearbeitungsgerätes 1 befindet sich eine Detektionseinrichtung 3, welche eingerichtet ist, einen Flächenparameter der Bodenfläche zu detektieren, nämlich hier die Art eines Bodenbelags der zu reinigenden Fläche. Die Detektionseinrichtung 3 ist beispielsweise eine Kamera, deren erfasste Bilder von einem Bildverarbeitungsprogramm der Datenverarbeitungseinrichtung 4 analysiert werden können, um die Bodenart zu ermitteln. Des Weiteren kann vorgesehen sein, dass die Detektionseinrichtung 3 bzw. die Datenverarbeitungseinrichtung 4 auch geeignet sind, eine Verschmutzungsintensität und/oder eine Verschmutzungsart der Bodenfläche zu ermitteln. Des Weiteren weist das Bodenbearbeitungsgerät 1 hier beispielsweise zwei Schnittstellen 6 auf, über welche Informationen an einen Nutzer bzw. an ein externes Endgerät 11 übermittelt werden können. Eine erste Schnittstelle 6 weist beispielsweise ein Display 10 zur Anzeige von Informationen für den Nutzer auf. Eine zweite Schnittstelle 6 ist hier eine Datenkommunikationsschnittstelle, welche einer drahtlosen Kommunikation mit dem externen Endgerät 11 dient. Diese Schnittstelle 6 kann beispielsweise ein Bluetooth-Modul, ein WLAN-Modul oder ähnliches aufweisen.

Das externe Endgerät 11 verfügt hier ebenfalls über eine nicht näher dargestellte Schnittstelle zur Kommunikation mit dem Bodenbearbeitungsgerät 1. Des Weiteren weist das externe Endgerät 11 ein Display 10 zur Anzeige von Informationen auf. Das Display 10 ist vorzugsweise ein Touchscreen, welcher gleichzeitig als Eingabeeinrichtung für den Nutzer dient. Auf dem externen Endgerät 11 ist eine Applikation installiert, mittels welcher dem Nutzer Informationen auf dem Display 10 dargestellt werden können und in welche beispielsweise Bearbeitungspräferenzen eingegeben werden können, um die Bodenbearbeitungstätigkeit des Bodenbearbeitungsgerätes 1 zu beeinflussen. Das Display 10 des externen Endgerätes 11 zeigt in der Figur 1 eine von dem Bodenbearbeitungsgerät 1 erstellte Umgebungskarte 9, welche einen Grundriss der Umgebung des Bodenbearbeitungsgerätes 1 darstellt, hier beispielsweise den Grundriss einer Wohnung, in welcher sich das Bodenbearbeitungsgerät 1 befindet. In der Umgebungskarte 9 sind verschiedene Flächenbereiche 7, 8 dargestellt, welche unterschiedliche Flächenparameter aufweisen.

Eine mögliche Ausführung der Erfindung funktioniert nun so, dass das Bodenbearbeitungsgerät 1 in der Umgebung verfährt und dabei mittels seiner Detektionseinrichtung 3 Bilder einer zu reinigenden Fläche aufnimmt. Dabei fährt das Bodenbearbeitungsgerät 1 beispielsweise im Rahmen einer Lernfahrt alle Räume der zu reinigenden Wohnung ab und erstellt die Umgebungskarte 9 mittels der Datenverarbeitungseinrichtung 4. Die Umgebungskarte 9 wird in dem Datenspeicher 5 des Bodenbearbeitungsgerätes 1 gespeichert. Darüber hinaus verfügt der Datenspeicher 5 über gespeicherte Zuordnungen zwischen mit dem Bodenbearbeitungsgerät 1 verbindbaren Bodenbearbeitungselementen 2 und verschiedenen Bodenflächenarten. Die Bodenbearbeitungselemente 2 können beispielsweise unterschiedliche Saugdüsen und/ oder Reinigungsbürsten für Hartboden oder verschiedene Arten von Teppichboden bzw. Teppichen sein, beispielsweise besonders weiche Bürsten für leicht verschiebbare Läufer oder hochflorige Teppiche oder kräftigere Reinigungsbürsten für kurzflorige Teppichböden. Die Datenverarbeitungseinrichtung 4 ermittelt durch Bildverarbeitung aus den Bildern der Detektionseinrichtung 3, welche Bodenarten die in der Umgebung vorhandenen Flächenbereiche 7, 8 aufweisen und trägt diese in die Umgebungskarte 9 ein. Die so erstellte Umgebungskarte 9 kann via der Datenkommunikationsschnittstelle 6 an das externe Endgerät 11 übertragen werden, so dass die Umgebungskarte 9 auf dem Display 10 des externen Endgerätes 11 angezeigt werden kann.

Um dem Nutzer nun einen Hinweis auf eine für die Umgebung des Bodenbearbeitungsgerätes 1 besonders geeignetes Bodenbearbeitungselement 2, nämlich hier beispielsweise eine bestimmte Reinigungsbürste, zu geben, analysiert die Datenverarbeitungseinrichtung 4 die in der Umgebungskarte 9 gespeicherten Flächenbereiche 7, 8 (oder eine Teilmenge dieser) in Bezug auf einen oder mehrere Flächenparameter der Bodenfläche, hier beispielsweise die Bodenart. Dabei ermittelt die Datenverarbeitungseinrichtung 4, welche Bodenart in der Gesamtheit aller ausgewählten Flächenbereiche 7, 8, beispielsweise der in der Umgebungskarte 9 verzeichneten gesamten Umgebung, am häufigsten vorkommt, d. h. welche Flächenart den größten Flächenanteil der Umgebung bedeckt. Gemäß der hier dargestellten Umgebungskarte 9 ist dies die Bodenart der Flächenbereiche 8, hier beispielsweise ein Hartboden. Die Datenverarbeitungseinrichtung 4 greift daraufhin auf den Datenspeicher 5 zu und ruft aus den darin gespeicherten Daten eine Benutzungsempfehlung zur Benutzung einer für einen Hartboden besonders geeignetes Bodenbearbeitungselement 2 ab. Die Benutzungsempfehlung wird von der Datenverarbeitungseinrichtung 4 beispielsweise über die Schnittstelle 6 an das externe Endgerät 11 übermittelt und/oder auf dem eigenen Display 10 des Bodenbearbeitungsgerätes 1 angezeigt.

Gemäß einer weiteren Ausführungsform ist es möglich, dass der Nutzer über das externe Endgerät 11 eine Bearbeitungspräferenz an die Datenverarbeitungseinrichtung 4 des Bodenbearbeitungsgerätes 1 übermittelt. Diese Bearbeitungspräferenz kann eine Information darüber enthalten, dass der Nutzer für eine anstehende Bodenbearbeitungstätigkeit des Bodenbearbeitungsgerätes 1 eher an einer sehr intensiven Reinigung der Umgebung interessiert ist, oder aber an einer schnellen Reinigung. Zur Übermittlung der Bearbeitungspräferenz kann die auf dem externen Endgerät 11 installierte Applikation dem Nutzer beispielsweise ein Auswahlmenü bereitstellen. Die Datenverarbeitungseinrichtung 4 empfängt die Bearbeitungspräferenz des Nutzers und wählt eine Empfehlung für ein Bodenbearbeitungselement 2 aus dem Datenspeicher 5 aus, welche nun sowohl zu dem Flächenparameter der quantitativ überwiegenden Flächenbereiche 8 der Umgebung, als auch zu der Bearbeitungspräferenz des Nutzers korrespondiert.

### Liste der Bezugszeichen

- 1: Bodenbearbeitungsgerät
- 2: Bodenbearbeitungselement
- 3: Detektionseinrichtung
- 4: Datenverarbeitungseinrichtung
- 5: Datenspeicher
- 6: Schnittstelle
- 7: Flächenbereich
- 8: Flächenbereich
- 9: Umgebungskarte
- 10: Display
- 11: Externes Endgerät
- 12: Gebläse
- 13: Elektromotor
- 14: Saugmund
- 15: Saugkanal
- 16: Rad
- 17: Filterkammer
- 18: Filterelement

## Patentansprüche

1. Bodenbearbeitungsgerät (1) mit einem Bodenbearbeitungselement (2) zur Einwirkung auf eine Bodenfläche, einer Detektionseinrichtung (3) zur Detektion eines Flächenparameters der Bodenfläche und mit einer Datenverarbeitungseinrichtung (4) zur Ermittlung des Flächenparameters anhand der von der Detektionseinrichtung (3) detektierten Detektionssignale, wobei der Datenverarbeitungseinrichtung (4) ein Datenspeicher (5) zugeordnet ist, welcher einem Flächenparameter der Bodenfläche zugehörig eine Benutzungsempfehlung zur Benutzung eines bestimmten Bodenbearbeitungselementes (2) speichert, und wobei die Datenverarbeitungseinrichtung (4) eingerichtet ist, die zu dem ermittelten Flächenparameter korrespondierende Benutzungsempfehlung aus dem Datenspeicher (5) abzurufen und über eine Schnittstelle (6) an einen Nutzer zu übermitteln, **dadurch gekennzeichnet, dass** die Datenverarbeitungseinrichtung (4) des Weiteren eingerichtet ist, eine Größe mindestens eines einen ersten Flächenparameter aufweisenden ersten Flächenbereichs (7) mit der Größe der übrigen Flächenbereiche (8) der Umgebung, welche einen von dem ersten Flächenparameter abweichenden Flächenparameter aufweisen, zu vergleichen und diejenige Benutzungsempfehlung aus dem Datenspeicher (5) abzurufen, welche zu dem Flächenparameter korrespondiert, der zu dem größten Flächenanteil der Gesamtheit der Flächenbereiche (7, 8) korrespondiert.

2. Bodenbearbeitungsgerät (1) nach einem der vorhergehenden Ansprüche, **gekennzeichnet durch** eine Navigationseinrichtung, welche eingerichtet ist, eine Umgebungskarte (9) der Umgebung des Bodenbearbeitungsgerätes (1) zu erstellen, wobei die Datenverarbeitungseinrichtung (4) eingerichtet ist, die Flächenparameter der Bodenfläche in die Umgebungskarte (9) einzutragen.

3. Bodenbearbeitungsgerät (1) nach einem der vorhergehenden Ansprüche, **dadurch gekennzeichnet, dass** die Schnittstelle (6) ein Display (10) zur Anzeige der Benutzungsempfehlung aufweist.

4. Bodenbearbeitungsgerät (1) nach einem der vorhergehenden Ansprüche, **dadurch gekennzeichnet, dass** die Schnittstelle (6) eine Datenkommunikationsschnittstelle zur drahtlosen Kommunikation mit einem externen Endgerät (11) aufweist, wobei die Datenverarbeitungseinrichtung (4) eingerichtet ist, die Benutzungsempfehlung mittels der Datenkommunikationsschnittstelle an das externe Endgerät (11) zu übermitteln und/oder eine Information über eine Bearbeitungspräferenz eines Nutzers zu empfangen.

5. Bodenbearbeitungsgerät (1) nach einem der vorhergehenden Ansprüche, **dadurch gekennzeichnet, dass** die Datenverarbeitungseinrichtung (4) eingerichtet ist, die Benutzungsempfehlung zusätzlich in Abhängigkeit von einer Bearbeitungspräferenz eines Nutzers zu wählen und/oder zu variieren, wobei die Bearbeitungspräferenz insbesondere eine Bearbeitungsdauer und/ oder eine Bearbeitungsqualität der Bodenbearbeitungstätigkeit ist.

6. Bodenbearbeitungsgerät (1) nach einem der vorhergehenden Ansprüche, **dadurch gekennzeichnet, dass** der Flächenparameter der Bodenfläche eine Art der Bodenfläche, insbesondere ein Hartboden oder Teppichboden, ist.

7. Bodenbearbeitungsgerät (1) nach einem der vorhergehenden Ansprüche, **dadurch gekennzeichnet, dass** das Bodenbearbeitungselement (2) eine Reinigungsbürste und/oder ein Wischelement ist.

8. System aus einem Bodenbearbeitungsgerät (1) nach einem der vorhergehenden Ansprüche und einem externen Endgerät (11), wobei das Bodenbearbeitungsgerät (1) und das externe Endgerät (11) korrespondierende Schnittstellen (6) für eine drahtlose Datenkommunikation miteinander aufweisen, und wobei die Datenverarbeitungseinrichtung (4) des Bodenbearbeitungsgerätes (1) eingerichtet ist, eine zu einem ermittelten Flächenparameter der Bodenfläche korrespondierende Benutzungsempfehlung über die Schnittstelle (6) an das externe Endgerät (11) zu übermitteln und/oder eine Information über eine Bearbeitungspräferenz eines Nutzers über die Schnittstelle (6) zu empfangen.

## Claims

1. A floor processing device (1) with a floor processing element (2) for acting on a floor surface, a detection device (3) for detecting a surface parameter of the floor surface, and with a data processing device (4) for determining the surface parameter based on the detection signals detected by the detection device (3), wherein the data processing device (4) has allocated to it a data memory (5), which stores a recommended use belonging to a surface parameter of the floor surface for using a specific floor processing element (2), and wherein the data processing device (4) is set up to retrieve the recommended use corresponding to the determined surface parameter from the data memory (5) and transmit it to a user via an interface (6), **characterized in that** the data processing device (4) is further set up to compare the size of at least one first surface area (7) that has a first surface parameter with the size of the remaining surface areas (8) of the environment, which have a surface parameter that deviates from the first surface parameter, and retrieve the recommended use from the data memory (5) corresponding to the surface parameter that corresponds to the largest surface portion from the entirety of the surface areas (7, 8).

2. The floor processing device (1) according to one of the preceding claims, **characterized by** a navigation device, which is set up to generate an area map (9) of the environment of the floor processing device (1), wherein the data processing device (4) is set up to enter the surface parameters of the floor surface into the area map (9).

3. The floor processing device (1) according to one of the preceding claims, **characterized in that** the interface (6) has a display (10) for showing the recommended use.

4. The floor processing device (1) according to one of the preceding claims, **characterized in that** the interface (6) has a data communication interface for wirelessly communicating with an external terminal (11), wherein the data processing device (4) is set up to transmit the recommended use to the external terminal (11) by means of the data communication interface and/or receive information about a processing preference of a user.

5. The floor processing device (1) according to one of the preceding claims, **characterized in that** the data processing device (4) is set up to additionally select and/or vary the recommended use as a function of a processing preference of a user, wherein the processing preference is in particular a processing duration and/or a processing quality of the floor processing activity.

6. The floor processing device (1) according to one of the preceding claims, **characterized in that** the surface parameter of the floor surface is a type of floor surface, in particular a hard floor or carpeted floor.

7. The floor processing device (1) according to one of the preceding claims, **characterized in that** the floor processing element (2) is a cleaning brush and/or a mopping element.

8. A system comprised of a floor processing device (1) according to one of the preceding claims and an external terminal (11), wherein the floor processing device (1) and the external terminal (11) have corresponding interfaces (6) for wireless data communication with each other, and wherein the data processing device (4) of the floor processing device (1) is set up to transmit a recommended use corresponding to a determined surface parameter of the floor surface to the external terminal (11) via the interface (6) and/or to receive information about a processing preference of a user via the interface (6).

## Revendications

1. Appareil de traitement du sol (1) comprenant un élément de traitement de sol (2) pour agir sur une surface de sol, un dispositif de détection (3) pour détecter un paramètre de surface de la surface de sol et un dispositif de traitement de données (4) pour déterminer le paramètre de surface sur la base des signaux de détection détectés par le dispositif de détection (3), dans lequel une mémoire de données (5) est associée au dispositif de traitement de données (4) laquelle mémorise, en association avec un paramètre de surface de la surface de sol, une recommandation d'utilisation pour l'utilisation d'un élément de traitement du sol déterminé (2), et dans lequel le dispositif de traitement de données (4) est configuré pour extraire de la mémoire de données (5) la recommandation d'utilisation correspondant au paramètre de surface déterminé et pour la transmettre à un utilisateur via une interface (6), **caractérisé en ce que** le dispositif de traitement de données (4) est en outre configuré pour comparer une taille d'au moins une première zone de surface (7) présentant un premier paramètre de surface avec la taille des autres zones de surface (8) de l'environnement qui présentent un paramètre de surface différent du premier paramètre de surface, et d'extraire de la mémoire de données (5) la recommandation d'utilisation qui correspond au paramètre de surface qui correspond à la plus grande proportion de surface de l'ensemble des zones de surface (7, 8) .

2. Appareil de traitement du sol (1) selon l'une des revendications précédentes, **caractérisé par** un dispositif de navigation qui est configuré pour établir une carte d'environnement (9) de l'environnement de l'appareil de traitement du sol (1), le dispositif de traitement de données (4) étant configuré pour entrer les paramètres de surface de la zone de sol dans la carte d'environnement (9).

3. Appareil de traitement du sol (1) selon l'une des revendications précédentes, **caractérisé en ce que** l'interface (6) comprend un écran (10) pour l'affichage de la recommandation d'utilisation.

4. Appareil de traitement du sol (1) selon l'une des revendications précédentes, **caractérisé en ce que** l'interface (6) comprend une interface de communication de données pour la communication sans fil avec un terminal externe (11), le dispositif de traitement de données (4) étant configuré pour transmettre la recommandation d'utilisation au terminal externe (11) au moyen de l'interface de communication de données et/ou pour recevoir une information sur une préférence de traitement de l'utilisateur.

5. Appareil de traitement du sol (1) selon l'une des revendications précédentes, **caractérisé en ce que** le dispositif de traitement de données (4) est configuré pour sélectionner et/ou modifier en outre la recommandation d'utilisation en fonction d'une préférence de traitement d'un utilisateur, la préférence de traitement étant en particulier une durée de traitement et/ou une qualité de traitement de la tâche de traitement du sol.

6. Appareil de traitement du sol (1) selon l'une des revendications précédentes, **caractérisé en ce que** le paramètre de surface de la surface de sol est un type de surface de sol, en particulier un sol dur ou un tapis.

7. Appareil de traitement du sol (1) selon l'une des revendications précédentes, **caractérisé en ce que** l'élément de traitement de sol (2) est une brosse de nettoyage et/ou un élément d'essuyage.

8. Système comprenant un appareil de traitement du sol (1) selon l'une des revendications précédentes et un terminal externe (11), dans lequel le dispositif de traitement du sol (1) et le terminal externe (11) ont des interfaces correspondantes (6) pour la communication de données sans fil l'un avec l'autre, et dans lequel le dispositif de traitement de données (4) du dispositif de traitement du sol (1) est configuré pour transmettre une recommandation d'utilisation correspondant à un paramètre de surface déterminé de la surface de sol au terminal externe (11) via l'interface (6) et/ou pour recevoir une information sur une préférence de traitement d'un utilisateur via l'interface (6).
